# EUROPÄISCHE PATENTSCHRIFT

(11) **EP 1 029 612 B1**
(45) Veröffentlichungstag und Bekanntmachung des Hinweises auf die Patenterteilung: **23.06.2004**
(21) Anmeldenummer: 00102421.5
(22) Anmeldetag: 04.02.2000
(51) Int. Cl.: B21D 43/02, B23Q 41/02, B23Q 7/04, B23Q 7/14

(54) **Vertikal- oder Horizontalbearbeitungszentrum und Verfahren zur einseitigen oder mehrseitigen Bearbeitung von Werkstücken auf einem Vertikal- oder Horizontalbearbeitungszentrum**
Machining center with vertical or horizontal spindles and method for machining a workpiece on one or more surfaces thereof by using such a machining center
Centre d'usinage à axe horizontal ou vertical et procédé d'usinage d'une pièce sur une ou plusieurs faces utilisant un tel centre

(30) Priorität: 15.02.1999 DE 19906014
(43) Veröffentlichungstag der Anmeldung: 23.08.2000
(73) Patentinhaber: ZF Lemförder Metallwaren AG, 49448 Lemförde (DE)
(72) Erfinder: Schleicher, Andrej, Dr., 49191 Belm (DE); Zeidler, Ernst-Georg, 49401 Damme (DE); Lagemann, Manfred, 49441 Lemförde (DE)

(56) Entgegenhaltungen:
- DE-A- 4 022 560
- DE-A- 4 134 442
- DE-U- 29 815 125

## Beschreibung

Die Erfindung betrifft ein Vertikal- oder Horizontalbearbeitungszentrum und ein Verfahren zur einseitigen oder mehrseitigen Bearbeitung von Werkstücken auf einem solchen Bearbeitungszentrum, gemäß dem Oberbegriff der Ansprüche 1 und 5.

Bekannt sind Bearbeitungszentren mit einem vertikalen oder horizontalen, schachtförmigen Arbeitsraum und seitlich darin angeordneten Spindeln. Jedes Werkzeug ist dabei in einer eigenen Spindel aufgenommen. Die zu fertigenden Werkstücke werden mittels eines einzigen Werkstückträgers zu der jeweiligen Spindel geführt, dort bearbeitet und zu dem nächstfolgenden Werkzeug weitergereicht.
Ein wesentlicher Nachteil bei diesem Prinzip ist darin zu sehen, daß die Bearbeitung der Werkstücke nur in einer Werkstückträgerposition erfolgen kann. Die anderen Spindeln warten dabei auf ihren Einsatz, sodaß unproduktive Nebenzeiten ohne Werkzeugeingriff entstehen. Das verringert die Wirtschaftlichkeit des Fertigungsmoduls insgesamt.

Bei der Beschickung und Entnahme der Werkstücke im Pick-up-Verfahren ist darüber hinaus keines der Werkzeuge im Einsatz. Dies verschlechtert ebenfalls das Verhältnis von unproduktiver Nebenzeit zur Werkzeugeingriffzeit.

Aus der DE 41 34 442 A1 ist eine Fertigungslinie zur spanenden Bearbeitung von Werkstücken bekannt, welche zusammen mit einem Werkstück-Spannfutter von einer ersten, einer Aufgabestation nachgeordneten Bearbeitungsstation zur nächsten und von der letzten Bearbeitungsstation zu einer Ausgabestation getaktet werden. Die Werkstück-Spannfutter passen in jede Bearbeitungsstation und werden derart getaktet, daß sie mittels einzelner Greifer, welche in einer der Anzahl der Bearbeitungsstationen entsprechenden Stückzahl an einem gemeinsamen Greiferbalken ausladend vorhanden sind, jeweils zwischen benachbarten Bearbeitungsstationen hin- und herbewegbar sind, wobei eine von der Ausgabestation zur Aufgabestation reichende Spannfutter-Rückbringvorrichtung vorgesehen ist. Diese transportiert die leeren Spannfutter zurück zu der genannten Aufgabestation, wo sie erneut ergriffen und mit einem zu bearbeitenden Werkstück versehen werden.
Bei einer Lösung nach der DE 41 34 442 A1 ist je Arbeitsgang ein Einspannvorgang und ein Ausspannvorgang erforderlich, sodaß durch die häufigen Spannvorgänge nicht nur Toleranzen am Fertigteil entstehen können, sondern auch erhebliche Zeitverluste auftreten, sodaß die Summe der Nebenzeiten größer ist als die Summe der Bearbeitungszeiten.

Aus der DE 40 22 560 A1 geht darüber hinaus ein Multistationsbearbeitungsgerät für den sukzessiven, also aufeinanderfolgenden Transport von Werkstücken von einer Bearbeitungsstation zur nächsten hervor, wobei der Transport ebenfalls mittels mehrerer Greifarme erfolgt. Die Bearbeitungsstationen sind gegeneinander versetzt auf zwei einander gegenüberliegenden Linien angeordnet; vorzugsweise sind dies Geraden, sodass Mitnehmer mittels der Greifarme die Werkstücke erfassen und in Richtung der Verbindungsgeraden der Bearbeitungsstationen auf einer regelmässigen Zickzacklinie transportieren. Die Greifarme sind dabei unabhängig voneinander bewegbar.
Auch bei dieser Ausführung ist also je Arbeitsgang ein Einspannvorgang und ein Ausspannvorgang erforderlich, was die zuvor bereits erwähnten Nachteile mit sich bringt.

Weiterhin ist aus der DE 298 15 125 U1 eine Vorrichtung zum spanabhebenden Bearbeiten von Werkstücken bekannt, die zwei auf einer Führungsbahn verfahrbare Werkstückhalter aufweist. Die Werkstückhalter sind jeweils auf einem Schlitten gelagert, der orthogonal zur Führungsbahn bewegt werden kann. Die Vorrichtung eignet sich für eine Bearbeitung von Werkstücken an mehreren Bearbeitungsstationen mit unterschiedlichen Bearbeitungsvorgängen.

Nachteilig hierbei ist jedoch, daß eine Bearbeitung eines Werkstückes von mehreren Seiten in einer Bearbeitungsstation nur durch zeitaufwendiges Neueinspannen möglich wird.

Der Erfindung liegt die technische Problemstellung zugrunde, den technologischen Ablauf der Bearbeitung von Werkstücken in Werkzeugmaschinen mit mehreren in zumindest einer Reihe angeordneten Spindeln so zu ändern, daß sich die Anzahl der Spindeln erhöht, die sich gleichzeitig im Einsatz befinden und sich damit die Ausbringung der Maschine erhöht.

Erfindungsgemäß wird diese technische Problemstellung dadurch gelöst, daß ein Vertikaloder Horizontalbearbeitungszentrum zum Einsatz kommt, das einen Maschinenständer mit in wenigstens einer Reihe angeordneten Spindeln oder Spindeleinheiten und einen ersten Werkstückträger aufweist, der mindestens entlang zweier Bewegungsachsen bewegbar ist, wobei das Vertikal- oder Horizontalbearbeitungszentrum wenigstens einen weiterem Werkstückträger aufweist, der sowohl bei der Beschickung, der Bearbeitung als auch bei der Entnahme der Werkstücke unabhängig von dem ersten Werkstückträger entlang der Bewegungsachsen bewegbar und einsetzbar ist. Dabei weist das Vertikal- oder Horizontalbearbeitungszentrum zwei Spindelreihen in einer gemeinsamen Ebene auf.
Die Werkstückträger werden nacheinanderfolgend von der einen oder von der anderen Seite der Spindelreihe mit Werkstücken bestückt bzw. die Werkstücke werden entnommen.

Dabei ist es vorteilhaft, bei einem erfindungsgemäßen Vertikal- oder Horizontalbearbeitungszentrum die beiden in einer gemeinsamen Ebene angeordneten Spindelreihen diametral gegenüberliegend anzuordnen.
Die Werkstückträger sollten gemäß einer weiteren Ausgestaltung der Erfindung hintereinanderfolgend angeordnet sein.

Die technische Problemstellung wird ferner durch ein Verfahren zur einseitigen oder mehrseitigen Bearbeitung von Werkstücken auf einem Vertikal- oder Horizontalbearbeitungszentrum nach der Erfindung gelöst.
Dieses Verfahren ist erfindungsgemäß durch die nachfolgenden Verfahrensschritte gekennzeichnet:
- Beschickung des ersten Werkzeugträgers mit einem ersten Werkstück in einer ersten Beschickungs- und Entnahmeposition,
- Zuführung des ersten Werkstückträgers zu einer ersten Bearbeitungsposition,
- Bearbeitung des ersten Werkstückes in der ersten Bearbeitungsposition, während etwa zeitgleich ein zweiter Werkstückträger, außerhalb des Arbeitsbereiches der Spindeleinheiten, innerhalb einer zweiten Beschickungs- und Entnahmeposition beschickt wird,
- Zuführung des ersten Werkzeugträgers zu der zweiten Bearbeitungsposition bei gleichzeitiger oder in etwa gleichzeitiger Zuführung des zweiten Werkstückträgers zu der ersten Bearbeitungsposition,
- Entleerung des ersten Werkstückträgers nach Abschluß der Bearbeitung des ersten Werkstückes in der ersten Beschickungs- und Entnahmeposition und unmittelbar anschließende Bestückung desselben, während der zweite Werkstückträger die letzte Bearbeitungsstufe durchläuft.

Die erfindungsgemäße Bearbeitungsabfolge kann so festgelegt werden, daß beim ersten Arbeitstakt des Vertikal- oder Horizontalbearbeitungszentrums ein erster Werkstückträger aus seiner Beschickungsposition mit dem beschickten Werkstück in Richtung der gegenüberliegenden Beschickungsposition bewegt wird und die Bearbeitung von dieser gegenüberliegenden zweiten Beschickungsposition aus zur Beschickungsposition des ersten Werkstückträgers hin erfolgt. Während der Bearbeitung des Werkstuckes oder der Werkstücke des ersten Werkstückträgers folgt diesem mindestens ein Werkstückträger mit zu bearbeitenden Werkstücken aus der zweiten Beschickungsposition heraus nach.

Bei einer Nebenzeit - bestehend aus der Beschickungszeit der Werkstücke in den Werkstückträger und der Bereitstellungszeit der Werkstücke - die in der Summe kleiner oder gleich der Summe der Bearbeitungszeit ist, erhöht sich die Ausbringung des Vertikal- oder Horizontalbearbeitungszentrums bei zumindest zwei Werkstückträgern um das Zweifache im Vergleich zu bekannten Maschinen.

Die zusätzliche Investition für den zweiten Werkstückträger ist dabei im Vergleich zur Gesamtinvestion der Maschine relativ gering. Das bedeutet konsequenterweise eine erhebliche Steigerung der Wirtschaftlichkeit des erfindungsgemäßen Vertikal- oder Horizontalbearbeitungszentrums und des zugehörigen Verfahrens.

Das erfindungsgemäße Vertikal- oder Horizontalbearbeitungszentrum sowie das hierauf angewendete Verfahren ermöglicht es, ohne die Erhöhung der Anzahl der Spindeln oder Spindeleinheiten die Ausbringung erheblich zu erhöhen.

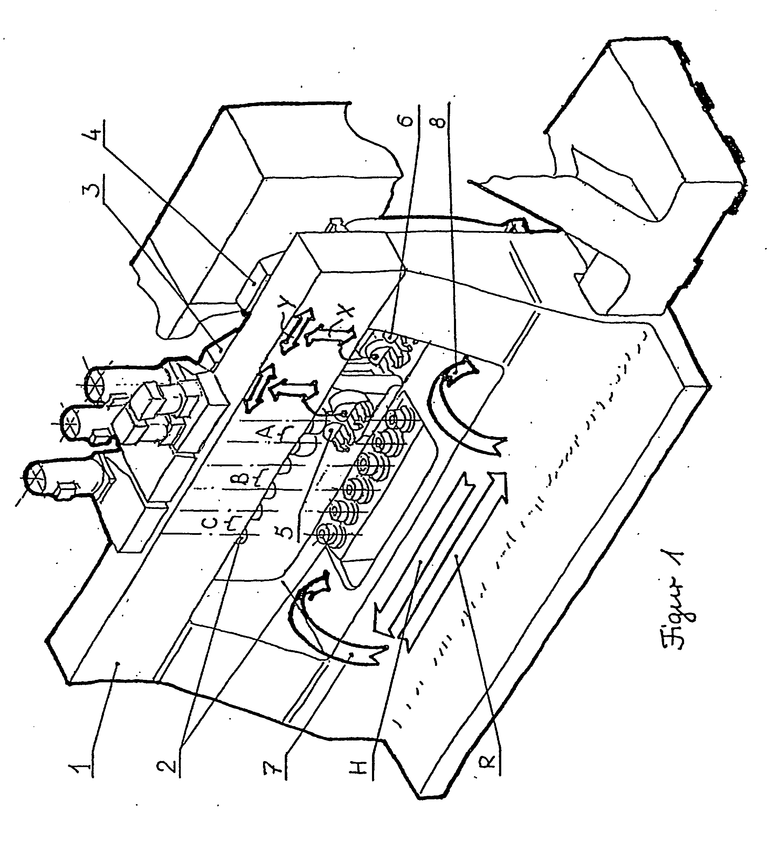

Eine erfindungsgemäße, bevorzugte Ausführungsform eines Vertikal- oder Horizontalbearbeitungszentrums und das hierauf angewendete Verfahren wird nachfolgend anhand der Darstellung in der Figur 1 näher erläutert.

Es zeigt:
- Figur 1:: ein erfindungsgemäßes Vertikalbearbeitungszentrum, welches auch als Horizontalbearbeitungszentrum konzipiert werden kann

Das Vertikal- oder Horizontalbearbeitungszentrum gemäß der Darstellung in der Figur 1 besteht aus einem Maschinenständer 1 mit Spindeln 2, die in zwei diametral gegenüberliegenden Reihen angeordnet sind.
Zwei Werkstückträger 3 und 4 mit Spannvorrichtungen 5 und 6 zur Aufnahme der Werkstücke sind entlang von Bewegungsachsen X und Y bewegbar. Durch die Bewegung entlang dieser Achsen wird die Zuführbewegung der Werkstückträger zu den Spindeln und die Bearbeitung der Werkstücke ermöglicht.
Der Maschinenständer 1 hat zwei Beschickungspositionen. Es sind dies eine erste Beschickungsposition 7 und eine zweite Beschickungsposition 8, in denen jeweils sowohl die Beschickung als auch die Entnahme der Werkstücke (in der Figur 1 nicht dargestellt) erfolgt.

Zu Beginn einer Bearbeitung von Werkstücken werden Werkstücke zunächst in der Beschickungsposition 7 in die Spannvorrichtungen 5 des Werkstückträgers 3 eingesetzt. Anschließend wird der Werkstückträger 3 in einer Bewegungsrichtung R in eine Bearbeitungsposition A verbracht. Hier beginnt die Bearbeitung des ersten Werkstückes.

Gleichzeitig werden auch die Spannvorrichtungen 6 des Werkstückträgers 4 beschickt, der unmittelbar nachdem der Werstückträger 3 die Bearbeitungsposition A verlassen hat, diese Bearbeitungsposition A einnimmt. Jetzt befinden sich zwei Werkstückträger mit den zu bearbeitenden Werkstücken gleichzeitig im Bearbeitungszyklus und zwar solange, bis der erste Werstückträger 3 alle Bearbeitungsstationen absolviert hat.(In der Figur 1 sind drei Bearbeitungsstationen gezeigt, bezeichnet mit A, B und C, es können aber auch beliebig mehr Bearbeitungsstationen vorhanden sein.) Der dem ersten Werkstückträger 3 nachfolgende Werkstückträger 4 befindet sich beim Absolvieren der Bearbeitungsschritte beziehungsweise der Bearbeitungsstationen immer einen Bearbeitungsschritt hinter dem Werkstückträger 3.

Ist die Bearbeitung der Werkstücke in Werkstückträger 3 beendet, wird dieser wieder in die Beschickungsposition 7 bewegt. Hier erfolgt die Entnahme der fertiggestellten Werkstücke und die Beschickung mit Rohlingen.
Zeitgleich mit der Entnahme der Werkstücke aus dem Werkstückträger 3 und der erneuten Beschickung dieses Werkstückträgers erfolgt die Endbearbeitung der Werkstücke, die in den Spannvorrichtungen 6 des Werkstückträgers 4 aufgenommen sind.

Idealerweise ist das Bestücken der Spannvorrichtungen 5 des Werkstückträgers 3 zur gleichen Zeit abgeschlossen, wie die Bearbeitung der Werkstücke, die in den Spannvorrichtungen 6 des Werkstückträgers 4 gespannt sind.
Jetzt fahren beide Werkstückträger 3 und 4 in Bewegungsrichtung R, und zwar der Werkstückträger 3 wieder in die Bearbeitungsposition A und der Werkstückträger 4 in die Beschickungsposition 8. Der Takt des Vertikal- oder Horizontalbearbeitungszentrums kann nunmehr neu beginnen.

Das erfindungsgemäße Verfahren und Vertikal- oder Horizontalbearbeitungszentrum ermöglicht es, ohne eine Erhöhung der Anzahl der Bearbeitungsspindeln die Ausbringung eines Vertikal- oder Horizontalbearbeitungszentrums erheblich zu erhöhen.
Ist die Beschickungszeit und die Bereitstellungszeit der Werkstücke in Bewegungsrichtung R oder H in der Summe kleiner oder gleich der Bearbeitungszeit, ist die Ausbringung sogar zweimal höher, als bei bekannten Verfahren.

### Bezugszeichenliste:

- 1: Maschinenständer
- 2: Spindel
- 3: erster Werkstückträger
- 4: zweiter Werkstückträger
- 5: Spannvorrichtung
- 6: Spannvorrichtung
- 7: erste Beschickungs- und Entnahmeposition
- 8: zweite Beschickungs- und Entnahmeposition
- A, B, C: Bearbeitungspositionen
- X, Y: Bewegungsachsen
- R: Bewegungsrichtung
- H: Bewegungsrichtung

## Patentansprüche

1. Vertikal- oder Horizontalbearbeitungszentrum bestehend aus einem Maschinenständer (1) mit in wenigstens einer Reihe angeordneten Spindeln oder Spindeleinheiten (2) und einem ersten Werkstückträger (3), der mindestens entlang zweier Bewegungsachsen (X, Y) bewegbar ist, wobei das Vertikal- oder Horizontalbearbeitungszentrum wenigstens einen weiteren Werkstückträger (4) aufweist, der sowohl bei der Beschickung, der Bearbeitung als auch bei der Entnahme der Werkstücke unabhängig von dem ersten Werkstückträger (3) entlang der Bewegungsachsen (X, Y) bewegbar und einsetzbar ist,
**dadurch gekennzeichnet, daß**
das Vertikal- oder Horizontalbearbeitungszentrum zwei Spindelreihen (2) aufweist, die in einer gemeinsamen Ebene angeordnet sind.

2. Vertikal- oder Horizontalbearbeitungszentrum nach Anspruch 1,
**dadurch gekennzeichnet, daß**
zwei Spindelreihen (2) in einer gemeinsamen Ebene diametral gegenüberliegend angeordnet sind.

3. Vertikal- oder Horizontalbearbeitungszentrum nach einem der vorigen Ansprüche,
**dadurch gekennzeichnet, daß**
die Werkstückträger (3, 4) in einer Reihe hintereinanderfolgend angeordnet sind.

4. Vertikal- oder Horizontalbearbeitungszentrum nach einem der vorigen Ansprüche,
**dadurch gekennzeichnet, daß**
die Werkstückträger (3, 4) jeweils mindestens eine Spannvorrichtung (5, 6) aufweisen.

5. Verfahren zur einseitigen oder mehrseitigen Bearbeitung von Werkstücken auf einem Vertikal- oder Horizontalbearbeitungszentrum, nach einem der vorigen Ansprüche **gekennzeichnet durch** folgende Schritte:
- Beschickung des ersten Werkstückträgers (3) mit einem ersten Werkstück in einer ersten Beschickungs- und Entnahmeposition (7),
- Zuführung des ersten Werkstückträgers (3) zu einer ersten Bearbeitungsposition (A)
- Bearbeitung des ersten Werkstückes mit den in der ersten Bearbeitungsposition (A) zum Einsatz kommenden Werkzeugen, während etwa zeitgleich ein zweiter Werkstückträger (4), außerhalb des Arbeitsbereiches der Spindeleinheiten (2), innerhalb einer zweiten Beschickungs- und Entnahmeposition (8) beschickt wird,
- Zuführung des ersten Werkzeugträgers (3) zu der zweiten Bearbeitungsposition (B) bei etwa zeitgleicher Zuführung des zweiten Werkstückträgers (4) zu der ersten Bearbeitungsposition (A),
- Zuführung des ersten Werkzeugträgers (3) zu einer etwaigen weiteren Bearbeitungsposition (C) bei etwa zeitgleicher Zuführung des zweiten Werkstückträgers (4) zu der zweiten Bearbeitungsposition (B),
- Entleerung des ersten Werkstückträgers (3) in der ersten Beschickungs- und Entnahmeposition (7) nach Abschluß der Bearbeitung des ersten Werkstückes und unmittelbar anschließende Bestückung desselben in der ersten Beschickungs- und Entnahmeposition (7) mit einem zu bearbeitenden Werkstück, während der Werkstückträger (4) die letzte Bearbeitungsstufe (C) durchläuft,
- Zuführung des Werkstückträgers (4) in die Beschickungs- und Entnahmeposition (8),
- Entleerung des Werkstückträgers (4) in der Beschickungs- und Entnahmeposition (8) und unmittelbar anschließende Bestückung desselben in der Beschickungs- und Entnahmeposition (8) mit einem zu bearbeitenden Werkstück, während der Werkstückträger (3) erneut die Bearbeitungsposition (A) durchläuft.

6. Verfahren zur einseitigen oder mehrseitigen Bearbeitung von Werkstücken auf einem Vertikal- oder Horizontalbearbeitungszentrum nach Anspruch 5,
**dadurch gekennzeichnet, daß**
beim ersten Takt des Vertikal- oder Horizontalbearbeitungszentrums ein erster Werkstückträger (3) aus seiner Beschickungsposition (7) zur gegenüberliegenden Beschickungsposition (8) in Bewegungsrichtung R bewegt wird und die Bearbeitung von der Beschickungsposition (8) aus zur Beschickungsposition (7), in Bewegungsrichtung H erfolgt.

7. Verfahren nach Anspruch 5 oder 6,
**dadurch gekennzeichnet, daß**
die Summe der Nebenzeiten kleiner oder gleich der Summe der Bearbeitungszeiten eines Bearbeitungszyklusses ist.

## Claims

1. Vertical or horizontal machining centre comprising a machine column (1) with spindles or spindle units (2) arranged in at least one row and a first workpiece carrier (3), which is movable at least along two axes of motion (X, Y), wherein the vertical or horizontal machining centre comprises at least one further workpiece carrier (4), which both during the loading, the machining and during the removal of the workpieces is movable along the axes of motion (X, Y) and usable independently of the first workpiece carrier (3),
**characterized in that**
the vertical or horizontal machining centre comprises two spindle rows (2), which are disposed in a common plane.

2. Vertical or horizontal machining centre according to claim 1,
**characterized in that**
two spindle rows (2) are arranged diametrically opposite in a common plane.

3. Vertical or horizontal machining centre according to one of the preceding claims,
**characterized in that**
the workpiece carriers (3, 4) are arranged successively in a row.

4. Vertical or horizontal machining centre according to one of the preceding claims,
**characterized in that**
the workpiece carriers (3, 4) each comprise at least one workholding fixture (5, 6).

5. Method of machining one or more sides of workpieces on a vertical or horizontal machining centre according to one of the preceding claims,
**characterized by** the following steps:
- loading the first workpiece carrier (3) with a first workpiece in a first loading and removal position (7),
- feeding the first workpiece carrier (3) to a first machining position (A)
- machining the first workpiece with the tools coming into use in the first machining position (A), while approximately at the same time a second workpiece carrier (4), outside of the working range of the spindle units (2), is loaded within a second loading and removal position (8),
- feeding the first tool carrier (3) to the second machining position (B) while approximately simultaneously feeding the second workpiece carrier (4) to the first machining position (A),
- feeding the first tool carrier (3) to a possible further machining position (C), while approximately at the same time feeding the second workpiece carrier (4) to the second machining position (B),
- emptying the first workpiece carrier (3) in the first loading and removal position (7) upon completion of the machining of the first workpiece, immediately followed in the first loading and removal position (7) by equipping the first workpiece carrier (3) with a workpiece to be machined, while the workpiece carrier (4) runs through the last machining stage (C),
- feeding the workpiece carrier (4) into the loading and removal position (8),
- emptying the workpiece carrier (4) in the loading and removal position (8), immediately followed in the loading and removal position (8) by equipping of the workpiece carrier (4) with a workpiece to be machined, while the workpiece carrier (3) once more runs through the machining position (A).

6. Method of machining one or more sides of workpieces on a vertical or horizontal machining centre according to claim 5,
**characterized in that**
during the first cycle of the vertical or horizontal machining centre a first workpiece carrier (3) is moved in direction of motion R from its loading position (7) to the opposite loading position (8) and the machining is effected in direction of motion H from the loading position (8) to the loading position (7).

7. Method according to claim 5 or 6,
**characterized in that**
the sum of the downtimes is less than or equal to the sum of the machining times of a machining cycle.

## Revendications

1. Centre d'usinage horizontal ou vertical constitué d'un bâti de machine (1) avec des broches ou des unités de broches (2), disposées sur au moins une rangée, et un premier porte-pièces (3), qui est mobile au moins le long de deux axes de déplacement (X, Y), le centre d'usinage horizontal ou vertical comportant au moins un porte-pièces (4) supplémentaire qui est mobile et utilisable indépendamment du premier porte-pièces (3) le long des axes de déplacement (X, Y), non seulement pendant le chargement, l'usinage, mais aussi pendant le déchargement des pièces, **caractérisé en ce que** le centre d'usinage horizontal ou vertical comporte deux rangées de broches (2), qui sont agencées dans un plan commun.

2. Centre d'usinage horizontal ou vertical selon la revendication 1, **caractérisé en ce que** deux rangées de broches (2) sont agencées de façon diamétralement opposée dans un plan commun.

3. Centre d'usinage horizontal ou vertical selon l'une quelconque des revendications précédentes, **caractérisé en ce que** les porte-pièces (3, 4) sont agencés l'un derrière l'autre dans une rangée.

4. Centre d'usinage horizontal ou vertical selon l'une quelconque des revendications précédentes, **caractérisé en ce que** les porte-pièces (3, 4) comportent chacun au moins un dispositif de serrage (5, 6).

5. Procédé d'usinage de pièces sur une ou plusieurs faces dans un centre d'usinage horizontal ou vertical selon l'une quelconque des revendications précédentes, **caractérisé par** les étapes suivantes :
- chargement d'une première pièce à usiner dans le premier porte-pièces (3) à l'intérieur d'un premier poste de chargement et de déchargement (7),
- acheminement du premier porte-pièces (3) vers un premier poste d'usinage (A),
- usinage de la première pièce dans le premier poste d'usinage (A), alors que pratiquement en même temps un deuxième porte-pièces (4) est chargé à l'intérieur d'un deuxième poste de chargement et de déchargement (8), en dehors de la zone de travail des unités de broches (2),
- acheminement du premier porte-pièces (3) vers le deuxième poste d'usinage (B) pendant l'acheminement simultané ou pratiquement simultané du deuxième porte-pièces (4) vers le premier poste d'usinage (A),
- acheminement du premier porte-pièces (3) vers un éventuel autre poste d'usinage (C) pendant l'acheminement simultané du deuxième porte-pièces (4) vers le deuxième poste d'usinage (B),
- à la fin de l'usinage de la première pièce, déchargement du premier porte-pièces (3) à l'intérieur du premier poste de chargement et de déchargement (7) et immédiatement après chargement d'une pièce à usiner dans celui-ci à l'intérieur du premier poste de chargement et de déchargement (7), pendant que le deuxième porte-pièces (4) passe à travers la dernière étape d'usinage (C),
- acheminement du porte-pièces (4) dans le poste de chargement et de déchargement (8),
- déchargement du porte-pièces (4) dans le poste de chargement et de déchargement (8) et immédiatement après chargement d'une pièce à usiner dans celui-ci à l'intérieur du poste de chargement et de déchargement (8), pendant que le porte-pièces (3) passe à nouveau à travers le poste d'usinage (A).

6. Procédé d'usinage de pièces sur une ou plusieurs faces dans un centre d'usinage horizontal ou vertical selon la revendication 5, **caractérisé en ce que** pendant le premier cycle de travail du centre d'usinage horizontal ou vertical, un premier porte-pièces (3) est acheminé dans la direction de déplacement (R) hors de son poste de chargement (7) vers le poste de chargement (8) disposé en face et l'usinage est effectué dans la direction de déplacement (H) à partir du poste de chargement (8) vers le poste de chargement (7).

7. Procédé selon la revendication 5 ou 6, **caractérisé en ce que** la somme des temps morts est inférieure ou égale à la somme des temps d'usinage d'un cycle d'usinage.
